Europäisches Patentamt

European Patent Office

Office européen des brevets

(19)

(11) Veröffentlichungsnummer : **0 111 176**
**B1**

# (12) EUROPÄISCHE PATENTSCHRIFT

(45) Veröffentlichungstag der Patentschrift :
07.05.86

(21) Anmeldenummer : 83111296.6

(22) Anmeldetag : 11.11.83

(51) Int. Cl.⁴ : **C 21 B 13/14**

(54) Verfahren und Anlage zur direkten Erzeugung von Eisenschwammpartikeln und flüssigem Roheisen aus stückigem Eisenerz.

(30) Priorität : 15.11.82 DE 3242232
05.08.83 DE 3328373

(43) Veröffentlichungstag der Anmeldung :
20.06.84 Patentblatt 84/25

(45) Bekanntmachung des Hinweises auf die Patenterteilung : 07.05.86 Patentblatt 86/19

(84) Benannte Vertragsstaaten :
AT BE CH DE FR GB IT LI LU NL SE

(56) Entgegenhaltungen :
EP-A- 0 014 274
DE-A- 3 115 275
FR-A- 1 377 897
US-A- 1 353 716
US-A- 3 199 974
US-A- 4 094 665
US-A- 4 248 626
US-A- 4 316 739

(73) Patentinhaber : Korf Engineering GmbH
Neusser Strasse 111
D-4000 Düsseldorf 1 (DE)

VOEST-ALPINE Aktiengesellschaft
Muldenstrasse 5
A-4020 Linz (AT)

(72) Erfinder : Vuletic, Bogdan, Dipl.-Ing.
Bilkerstrasse 19
D-4000 Düsseldorf (DE)

(74) Vertreter : Meinig, Karl-Heinz, Dipl.-Phys. et al
PATENTANWÄLTE PFENNING MEINIG & PARTNER
Kurfürstendamm 170
D-1000 Berlin 15 (DE)

EP 0 111 176 B1

Jouve, 18, rue St-Denis, 75001 Paris, France

## Beschreibung

Die Erfindung betrifft ein Verfahren gemäß dem Gattungsbegriff des Patentanspruchs 1. Ferner bezieht sie sich auf eine Anlage gemäß dem Gattungsbegriff der Patentansprüche 25 und 32. Unter dem Begriff stückiges Eisenerz soll Eisenerz in beliebiger stückiger Form, also auch in Form von Pellets verstanden werden.

Ein Verfahren und eine Anlage dieser Art sind durch die DE-C2-30 34 539 bekannt geworden. Bei dem bekannten Verfahren entsteht beim Einschmelzen des Eisenschwamms ca. 40 % mehr Reduktionsgas, als für die Erzeugung der gleichen Eisenschwamm-Menge erforderlich ist. Für einen wirtschaftlichen Betrieb der Anlage ist es erforderlich, daß Abnehmer für das überschüssige Gas vorhanden sind. Dies hat zur Folge, daß eine Koppelung mit anderen Anlagen erfolgen muß. Jede Koppelung von mehreren Anlagen führt jedoch zu einer Verringerung der Verfügbarkeit der Gesamtanlage und damit zu einer Verschlechterung der Wirtschaftlichkeit.

Je nach verwendetem Eisenerz werden aus dem Reduktionsaggregat auch größere Eisenschwammstücke ausgetragen, die das Kohlefließbett im Einschmelzvergaser schnell durchwandern, da sie schon mit großer Geschwindigkeit in den Beruhigungsraum eintreten, in dem sich ihre Fallgeschwindigkeit weiter erhöht. Aufgrund der kurzen Verweilzeit im Kohlefließbett ist ihre Erwärmung entsprechend geringer.

Kleine Eisenschwammpartikel verweilen dagegen im Fließbett länger, erwärmen sich auf eine höhere Temperatur und werden schneller aufgeschmolzen.

Aufgabe der Erfindung ist es, ein Verfahren der einleitend genannten Art verfügbar zu machen, das ohne Gasüberschuß wirtschaftlich arbeitet und mit dem die spezifische Leistung des Einschmelzvergasers erhöht und dessen Arbeitsweise verbessert werden kann. Ferner ist es Aufgabe dieser Erfindung, eine Anlage zur Durchführung dieses Verfahrens verfügbar zu machen.

Das erfindungsgemäße Verfahren ist durch die Merkmale des Anspruchs 1 gekennzeichnet. Vorteilhafte Ausgestaltungen dieses Verfahrens sind den Ansprüchen 2 bis 24 zu entnehmen. Die erfindungsgemäße Anlage ist durch die Merkmale des Anspruchs 25 gekennzeichnet. Vorteilhafte Ausgestaltungen der erfindungsgemäßen Vorrichtung sind in den Ansprüchen 26 bis 36 beschrieben.

Beim erfindungsgemäßen Verfahren wird dem Einschmelzvergaser nicht die gesamte Menge der im Direktreduktionsaggregat erzeugten Eisenschwammpartikel zugeführt, sondern nur ein Teil, so daß beim Einschmelzen dieser Teilmenge auch weniger Gas anfällt und auf diese Weise ein Überschuß an Reduktionsgas vermieden werden kann. Die dem Einschmelzvergaser zugeführte Teilmenge an Eisenschwammpartikeln ist insoferne ausgewählt, als die Partikelgröße nach oben begrenzt ist. Hierdurch wird vermieden, daß größere Eisenschwammstücke ohne ausreichende Erwärmung das Kohlefließbett durchwandern und es dann in der Schmelzzone des Einschmelzvergasers zu einer Anhäufung von nur mit erhöhtem Energieaufwand aufschmelzbarem Material kommt. Die auf dem Weg vom Reduktionsaggregat zum Einschmelzvergaser ausgeschiedene Grobkornfraktion kann entweder im heißen Zustand einem weiteren Einschmelzgefäß, wie einem Lichtbogenofen, zugeführt werden, sie kann aber auch heißbrikettiert, passiviert oder gekühlt werden, um als Einsatzmaterial für einen Schmelzofen zur Verfügung zu stehen.

Da bei dem erfindungsgemäßen Verfahren nur die Feinkornfraktion im Einschmelzvergaser eingeschmolzen wird, können Schwierigkeiten entstehen, falls im Einschmelzvergaser unveredelte, schwefelreiche Kohle eingesetzt wird. Die Feinkornfraktion bindet nämlich wegen der auf das Gewicht bezogenen größeren Oberfläche der feinen Eisenschwammpartikel einen größeren Anteil des im Reduktionsgas enthaltenen Schwefels als die Grobkornfraktion, so daß es bei dem im Einschmelzvergaser erzeugten flüssigen Roheisen zu einem unerwünscht hohen Anstieg des Schwefelgehalts kommt. Es sind dann zusätzliche Maßnahmen zur Verringerung des Schwefelgehaltes erforderlich, die integriert in das erfindungsgemäße Verfahren einzeln oder in Kombination in den folgenden Schritten bestehen können:

1. Dem Einschmelzvergaser wird ein Entschwefelungsmittel zugeführt.

2. Der Anteil des durch Vergasung von Kohle erzeugten Rohgases im Reduktionsgas wird durch Beimischen eines Teils des Gichtgases des Direktreduktionsaggregates nach einer $CO_2$-Wäsche verringert; und

3. der Anteil der Feinkornfraktion, die im Einschmelzvergaser eingeschmolzen wird, wird zur Einsparung an erforderlicher Schmelzwärme, die wiederum durch Verbrennung von Kohle aufgebracht werden muß, verringert.

Bei der unter 3. genannten Maßnahme ist es auch möglich, dem Einschmelzvergaser einen Teil des Gichtgases des Direktreduktionsaggregates als Sauerstoffträger zuzuführen und durch endotherme Reaktionen mit dem Kohlendioxid und dem Wasserdampf im Gichtgas einen Teil der Kohle zu vergasen.

Durch die Herabsetzung des Schwefelgehalts der Eisenschwammpartikel der Feinkornfraktion wird bei den genannten Maßnahmen auch eine wesentliche Herabsetzung des Schwefelgehaltes der Eisenschwammpartikel der Grobkornfraktion, die anderweitig verwertet werden, erreicht, so daß beim Einschmelzen dieser Eisenschwammpartikel keine besonderen Maßnahmen zur Schwefelentfernung mehr vorgesehen werden müssen.

Wird die Trennung der Eisenschwammpartikel in eine Feinkorn- und in eine Grobkornfraktion unmittelbar nach dem Austrag aus dem Direktreduktionsaggregat vorgenommen, dann muß der Grobkornabscheider für Temperaturen zwischen 700° und 900 °C ausgelegt sein, da die Eisenschwammpartikel das Direktreduktionsaggregat mit diesen Temperaturen verlassen. Bei einigen Klassiervorrichtungen, insbesondere bei der Verwendung von Sieben, kann dies zu Schwierigkeiten führen. In diesem Fall ist es zweckmäßig, die Klassierung der Eisenschwammpartikel erst nach einer Abkühlung vorzunehmen, wobei vorzugsweise gewaschenes und aufbereitetes Gichtgas des Direktreduktionsaggregates als Kühlmedium verwendet wird. In diesem Fall ist es zweckmäßig, Maßnahmen vorzusehen, durch die dem Kühlmedium der Weg über die Förderleitung der Eisenschwammpartikel in das Direktreduktionsaggregat versperrt bleibt.

Eine Kühlung der ausgeschiedenen Eisenschwammpartikel erfolgt vorzugsweise durch abgekühltes, gereinigtes und aufbereitetes Gichtgas aus dem Reduktionsaggregat, das nach dem Wärmetausch mit den Eisenschwammpartikeln dem vom Einschmelzvergaser zum Reduktionsaggregat geleiteten heißen Reduktionsgasstrom zur Temperatursteuerung beigemischt wird. Auf diese Weise wird auch das Gichtgas des Reduktionsaggregates wirtschaftlich ausgenutzt.

Durch die Ausscheidung der Eisenschwammpartikel der Grobkornfraktion wird der relative Anteil an Feinmaterial des dem Einschmelzvergaser zugeführten Eisenschwammes erhöht und damit auch die Menge eines möglichen Austrags an Feinmaterial aus dem Einschmelzvergaser. Gemäß einer Weiterbildung der Erfindung wird deshalb die Stelle, an der die Eisenschwammpartikel innerhalb des Einschmelzvergasers freigegeben werden, vom Deckel des Gefäßes nach unten in die Nähe der Obergrenze des Kohlefließbettes verlegt. Dies geschieht vorzugsweise durch ein Fallrohr, das von oben in den Innenraum des Einschmelzvergasers bis in die Nähe der Obergrenze des sich in dem Einschmelzvergaser ausbildenden Kohlefließbettes eintaucht. Auf diese Weise ist es auch möglich, die Eisenschwammpartikel mit abgebremster Vertikalgeschwindigkeitskomponente zuzuführen, sei es durch eine entsprechende Umlenkung mittels kaskadenförmig angeordneter Vorsprünge im unteren Bereich des Fallrohres oder durch wenigstens ein Prallblech unterhalb des Fallrohres, das vorzugsweise in Form eines stumpfen Kegels ähnlich einem Chinesenhut ausgebildet ist.

Für eine dosierte Zufuhr der Eisenschwammpartikel in den Einschmelzvergaser ist es zweckmäßig zwischen dem Grobkornabscheider und dem Einschmelzvergaser eine Austragvorrichtung vorzusehen, durch die das Fallrohr oder die Fallrohre in gesteuerter Menge mit Eisenschwammpartikeln beliefert werden. Auf diese Weise läßt sich auch der Strömungswiderstand für das über das Fallrohr hochsteigende Reduktionsgas erhöhen und eine Überhitzung und Sinterung der Eisenschwammpartikel im Bereich des Grobkornabscheiders und im unteren Teil des Reduktionsaggregates vermeiden.

Die Erfindung wird durch zwei Ausführungsbeispiele anhand von vier Figuren näher erläutert. Es zeigen :

Figur 1 eine schematische Darstellung einer ersten Ausführungsform eines Verfahrens und einer Anlage gemäß dieser Erfindung,

Figur 2 in einem Längsschnitt die Ausbildung eines Fallrohres mit Flüssigkeitskühlung,

Figur 3 die schematische Darstellung eines Grobkornabscheiders, und

Figur 4 eine schematische Darstellung einer zweiten Ausführungsform eines Verfahrens und einer Anlage gemäß dieser Erfindung.

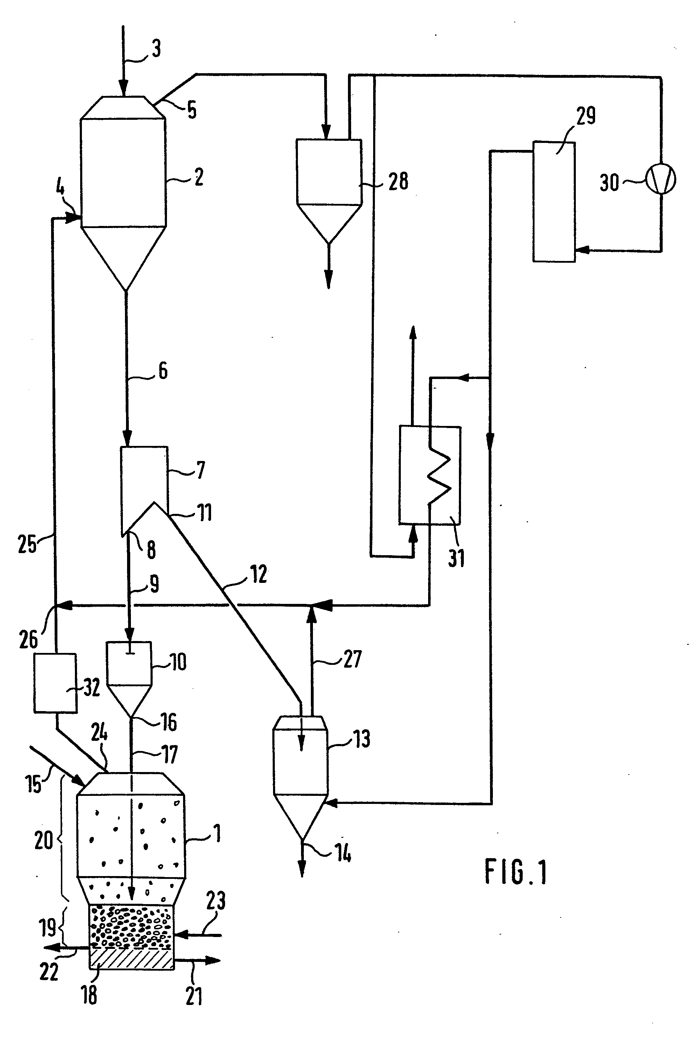

Die in Fig. 1 schematisch dargestellte Anlage zur direkten Erzeugung von flüssigem Roheisen aus stückigem Eisenerz enthält einen Einschmelzvergaser 1 der in der EP-B1-0 010 627 beschriebenen Art. Oberhalb des Einschmelzvergasers ist ein Schachtofen 2 angeordnet, der entsprechend seiner Funktionsweise mit dem oberen Teil eines Hochofens oder eines Direktreduktionsschachtofens verglichen werden kann. Letzterer ist im Prinzip beispielsweise in der DE-A-29 35 707 beschrieben. Dem Direktreduktionsschachtofen wird von oben stückiges Eisenerz zugeführt — durch einen Pfeil 3 angedeutet —, das in Form einer losen Schüttung im Schachtofen absinkt und mittels eines über einen mittleren Gaseinlaß 4 eingeblasenen heißen Reduktionsgases einer Temperatur von etwa 750° und 900 °C zu Eisenschwamm reduziert wird. Das verbrauchte Reduktionsgas, im folgenden Gichtgas genannt, verläßt den Schachtofen 2 über einen oberen Gasauslaß 5.

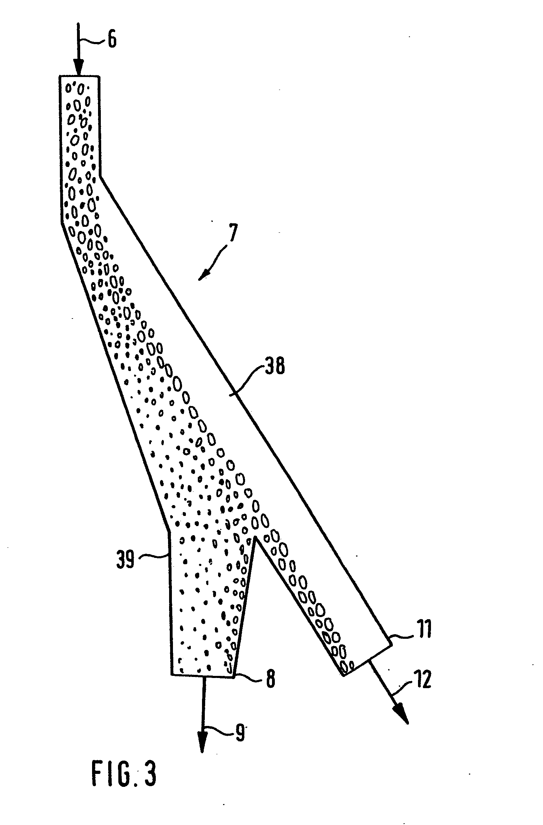

Der durch Reduktion des stückigen Eisenerzes erzeugte heiße Eisenschwamm wird mit einer Temperatur von etwa 750° bis 850 °C unten aus dem Direktreduktionsschachtofen 2 ausgetragen und gelangt über ein Rohr 6 in einen Grobkornabscheider 7. Dieser ist, wie anhand von Fig. 3 näher beschrieben, ausgebildet. Alternativ enthält er ein thermisch belastbares Sieb einer Maschenweite von z. B. 12 mm, durch das Eisenschwammpartikel mit einer Größe von mehr als 12 mm zurückgehalten werden. Es erfolgt eine Trennung in eine Feinkornfraktion und eine Grobkornfraktion. Die Eisenschwammpartikel der Feinkornfraktion verlassen den Grobkornabscheider 7 über eine erste Austrittsöffnung 8 und gelangen über ein Rohr 9 in eine Austragvorrichtung 10, die beispielsweise einen Räumer oder eine Schnecke enthält. Die Eisenschwammpartikel der Grobkornfraktion verlassen den Grobkornabscheider 7 durch eine zweite Austrittsöffnung 11 und gelangen über ein Rohr 12 zu einem Kühlaggregat 13, in dem sie bis auf Raumtemperatur herabgekühlt werden, so daß sie ohne große Reoxidationsgefahr an die Stelle weitertransportiert werden können, an der sie verarbeitet werden sollen. Der Austritt der gekühlten Eisenschwammpartikel aus dem Kühlaggregat 13 ist mit 14 bezeichnet.

Die Austragvorrichtung 10 weist am unteren Ende eine Austrittsöffnung 16 für die Eisenschwammpartikel auf, die über wenigstens ein Fallrohr 17 mit dem Innenraum des Einschmelzvergasers 1 in Verbindung steht. Die Eisenschwammpartikel werden über die Austrittsöffnung 16 dosiert abgegeben. Auf diese Weise werden die für den Einschmelzvergaser erforderlichen Einsatzmaterialien kontinuierlich oder intermittierend in der für den Einschmelzprozeß erforderliche Menge über das Fallrohr 17 zugegeben. Die zur Bildung und Aufrechterhaltung des Kohlefließbettes erforderliche Kohlemenge wird dem Einschmelzvergaser über ein Rohr 15 direkt zugegeben.

Wie in der EP-B1-0 010 627 beschrieben, kann der Einschmelzvergaser im Betriebszustand in drei Abschnitte unterteilt werden, nämlich in einen unteren Abschnitt 18, in dem sich Roheisen und Schlacke befinden, in einen mittleren Abschnitt 19 für das Kohlefließbett und in einen erweiterten oberen Abschnitt 20, der als Beruhigungsraum dient. Gemäß einer Weiterbildung der Erfindung erfolgt die Zufuhr der Eisenschwammpartikel nicht an der Obergrenze des Beruhigungsraumes, sondern innerhalb des Beruhigungsraumes in der Nähe der Obergrenze des Kohlefließbettes 19. Dies geschieht im vorliegenden Fall dadurch, daß das Fallrohr 17 tief in den Beruhigungsraum 20 eintaucht. Auf diese Weise läßt sich die mit dem Gas aus dem Einschmelzvergaser ausgetragene Feinkornmenge, die bei dem erfindungsgemäßen Verfahren bezogen auf die Gesamtmenge an in den Einschmelzvergaser gebrachtem Eisenschwamm eine besondere Rolle spielt, stark reduzieren. Die günstigste Eintauchtiefe des Fallrohres 17 läßt sich experimentell einfach bestimmen. Zweckmäßig endet das Fallrohr kurz oberhalb der Obergrenze des Kohlefließbettes.

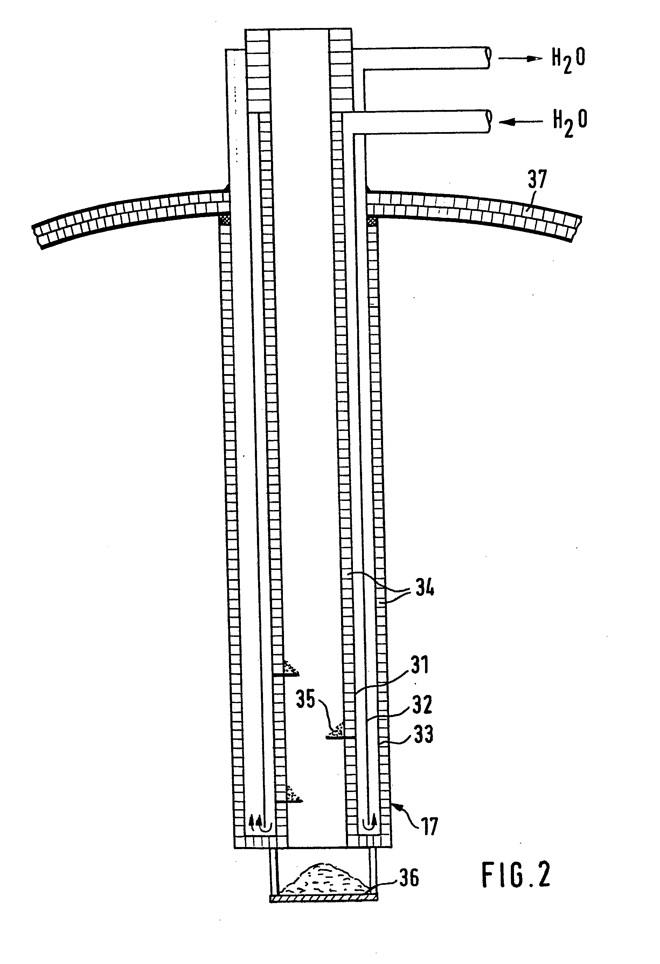

Die Verwendung eines oder mehrerer Fallrohre 17 ermöglicht zudem, sei es durch Umlenkung dieser Rohre am unteren Ende, sei es durch Anbringen von Prallblechen, die senkrechte Geschwindigkeitskomponente des herabfallenden Gutes wesentlich zu vermindern und damit die Verweilzeit der Eisenschwammpartikel im Kohlefließbett zu vergrößern. Wegen der hohen thermischen Beanspruchung eines in den Innenraum des Einschmelzvergasers eintauchenden Fallrohres ist es zweckmäßig, das Rohr zu kühlen. Eine Möglichkeit der Ausbildung eines solchen Fallrohres wird anhand von Fig. 2 beschrieben.

In Fig. 1 sind bei dem Einschmelzvergaser 1 noch die Rinnen 21 und 22 für den Abstich des Roheisens und der Schlacke sowie eine Düse 23 zum Einblasen eines sauerstoffhaltigen Gases schematisch angedeutet.

Das im Einschmelzvergaser 1 erzeugte Reduktionsgas verläßt den Einschmelzvergaser über den Auslaß 24 mit einer Temperatur von etwa 1 200 °C. Es wird von hier über die Reduktionsgasleitung 25 zum Gaseinlaß 4 des Direktreduktionsaggregates 2 weitergeleitet. Da das in das Direktreduktionsaggregat 2 eingeleitete Reduktionsgas eine Temperatur von 900 °C nicht überschreiten darf, wird den in der Leitung 25 aufsteigenden heißen Reduktionsgasstrom zur Temperatursteuerung an der Stelle 26 Kühlgas beigemischt, das über die Leitung 17 herangeführt wird. Dieses Kühlgas ist zurückgeführtes Gichtgas des Direktreduktionsaggregates 2, nachdem dieses in einem Gichtgaswäscher 28 gewaschen und gekühlt worden ist und in einem $CO_2$-Absorptionsturm 29 der $CO_2$-Anteil verringert worden ist. Obwohl das so aufbereitete Gichtgas bereits in dieser Form dem heißen Reduktionsgas aus dem Einschmelzvergaser zur Temperatursteuerung beigemischt werden könnte, wurde es bei dem beschriebenen Ausführungsbeispiel über den Kühler 13 geleitet und bewirkt hier im direkten Wärmeaustausch mit den Eisenschwammpartikeln der Grobkornfraktion eine Abkühlung dieser Eisenschwammpartikel. Bei diesem Wärmeaustausch erwärmt sich das aufbereitete Gichtgas auf ca. 500 °C. Es wird dann über die Leitung 27 an der Stelle 26 dem heißen Reduktionsgasstrom der Leitung 25 zugemischt, um dessen Temperatur auf einen Wert unterhalb 900 °C zu erniedrigen. Wenn in der Anlage mehr Eisenschwamm als Roheisen erzeugt werden soll, ist es erforderlich, einen Teil des aufbereiteten Gichtgases im separaten Rekuperator 31 in Parallelschaltung zum Kühlaggregat 13 vorzuwärmen, um die gewünschte Bustlegastemperatur einstellen zu können. Als Heizgas soll das unaufbereitete Gichtgas hinter dem Gichtgaswäscher 28 verwendet werden, dessen Menge vom Wärmebedarf abhängig ist. Dadurch wird auch die Anreicherung des Kreislaufgases mit inaktiven Komponenten wie $N_2$ vermieden.

Mit 30 ist in Fig. 1 ein dem $CO_2$-Absorptionsturm 29 vorgeschalteter Verdichter bezeichnet, der den erforderlichen Druck erzeugt. Um Eisenschwamm mit wenig Schwefel erzeugen zu können, ist es erforderlich, das Gas aus dem Einschmelzvergaser 1 im Heißgasentschwefelungsaggregat 32 zu entschwefeln. Zu diesem Zweck kann diesem Gas etwas Kaltgas beigemischt werden, um seine Temperatur dem Entschwefelungsvorgang anzupassen.

Zur Vermeidung einer Sinterbildung ist es erforderlich, daß die Menge der über die Rohre 17, 9 und 6 nach oben gelangenden heißen Gase aus dem Einschmelzvergaser gering gehalten wird. Dies ist durch einen hohen Strömungswiderstand im Bereich Austragsvorrichtung 10, Fallrohr 9 und Grobkornabscheider 7 möglich, wenn der Austrag so gesteuert wird, daß das Rohr 9 stets wenigstens zum Teil mit Material ausgefüllt ist. Auf diese Weise wird der Widerstand des Nebenweges zur Reduktionsgasleitung 25 so hoch gehalten, daß sich keine schädliche Gasströmung über diesen Nebenweg ausbilden kann.

In Fig. 2 ist der in den Einschmelzvergaser eintauchende Teil eines Fallrohres 17 im Schnitt dargestellt. Wegen der hohen thermischen Beanspruchung im Inneren des Einschmelzvergasers ist das Fallrohr mit einer Flüssigkeitskühlung versehen. Zu diesem Zweck wird durch drei konzentrisch zueinander angeordnete Metallrohre 31, 32 und 33 in der dargestellten Weise ein Flüssigkeitskanal gebildet, durch den eine Kühlflüssigkeit beispielsweise Wasser hindurchgeleitet wird. Das Kühlsystem ist allseitig mit einer feuerfesten Schicht 34 bedeckt.

Das dargestellte Fallrohr 17 enthält Maßnahmen durch Umlenkung die Vertikalgeschwindigkeit der herabfallenden Eisenschwammpartikel zu verringern und damit wegen der verringerten Eintrittsgeschwindigkeit in das Kohlefließbett hier die Verweilzeit zu erhöhen. Zu diesem Zweck sind im unteren Bereich des Fallrohres kaskadenförmig angeordnete Vorsprünge 35 vorgesehen, auf denen sich Material ablagern kann, das dadurch als Verschleißschutz dient. Anstelle dieser Vorsprünge oder zusätzlich zu diesen Vorsprüngen kann auch an der unteren Austrittsöffnung des Rohres ein Prallblech 36, vorzugsweise in Form eines stumpfen Kegels ähnlich einem Chinesenhut, vorgesehen sein. Die herabfallenden Eisenschwammpartikel werden durch die Vorsprünge 35 im Rohr mäanderförmig abgelenkt und abgebremst und durch das Prallblech 36 etwa in eine horizontale Richtung abgelenkt, wodurch ihre vertikale Geschwindigkeitskomponente beträchtlich verringert wird. Mit 37 ist in Fig. 2 die Decke des Einschmelzvergasers bezeichnet.

Der in Fig. 3 schematisch dargestellte Grobkornabscheider 7 ist in Form einer schrägen Fallrinne 38 mit wenigstens einem von dieser nach unten abzweigenden Stutzen 39 ausgebildet. Entsprechend Fig. 1 ist das Rohr über das die aus dem Direktreduktionsschachtofen ausgetragenen Eisenschwammpartikel zugeführt werden mit 6 bezeichnet, die erste Austrittsöffnung für die Feinkornfraktion mit 8 und die zweite Austrittsöffnung für die Grobkornfraktion mit 11.

Das von oben in den Grobkornabscheider 7 eintretende Schüttgut wird während der Bewegung durch den Grobkornabscheider natürlich entmischt, d. h. die feinen Partikel setzen sich nach unten ab und die groben sammeln sich an der Oberseite. Bei geeigneter Steuerung des Abzugs der Eisenschwammpartikel der Feinkornfraktion aus der ersten Austrittsöffnung 8 erhält man das in Fig. 3 schematisch dargestellte Fließprofil, d. h. die groben Eisenschwammpartikel werden im wesentlichen über das Fallrohr 38 zur zweiten Austrittsöffnung 12 weitergeleitet und von dort abgezogen. Erfolgt die Steuerung des Abzugs der feinen Eisenschwammpartikel entsprechend Fig. 1 durch eine Austragsvorrichtung 10, die über ein Rohr mit dem Grobkornabscheider 7 verbunden ist, dann läßt sich, wie gewünscht, der Strömungswiderstand für das aus dem Einschmelzvergaser hochsteigende Gas verhältnismäßig hoch halten.

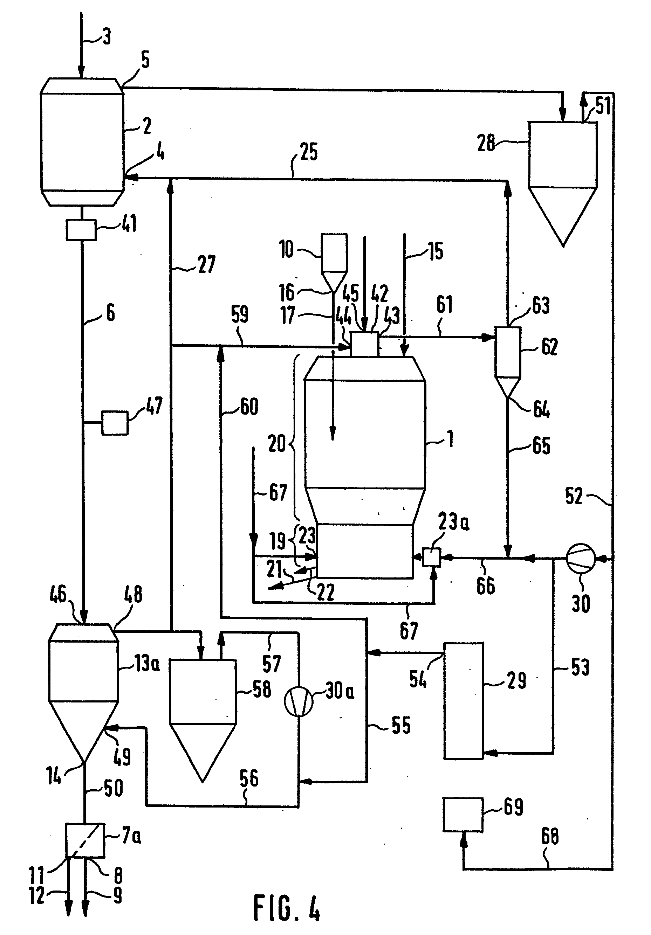

Bei der schematischen Darstellung einer zweiten Ausführungsform einer Anlage nach Fig. 4 sind die mit der Anlage nach Fig. 1 übereinstimmenden Teile durch dieselben Bezugszeichen gekennzeichnet.

Ein als Direktreduktionsschachtofen 2 ausgebildetes Direktreduktionsaggregat weist oben eine Eintragvorrichtung 3 für das stückige Eisenerz und einen Gasauslaß 5 für das verbrauchte Reduktionsgas (Gichtgas) und unten eine steuerbare Austragvorrichtung 41 für die durch Direktreduktion aus dem Eisenerz gewonnenen Eisenschwammpartikel sowie einen Gaseinlaß 4 für heißes Reduktionsgas auf. Der Einschmelzvergaser 1 entspricht im wesentlichen dem Einschmelzvergaser der ersten Ausführungsform. Die Decke des als Beruhigungsraum dienenden oberen Abschnittes 20 weist hier jedoch eine als Vergaserkopf 42 bezeichnete Kammer auf, die mit dem Beruhigungsraum in Verbindung steht. Im Vergaserkopf ist ein Gasauslaß 43 für das im Einschmelzvergaser erzeugte Reduktionsgas (Rohgas), ein Gaseinlaß 44 für gewaschenes und aufbereites Gichtgas des Direktreduktionsschachtofens sowie ein Einlaß 45 für ein Entschwefelungsmittel vorgesehen. Durch die Decke des Einschmelzvergasers sind außerdem das Rohr 15 für die Zugabe von Kohle und das Tauchrohr 17 für die Zugabe der Feinkornfraktion durchgeführt.

Im unteren Bereich des Einschmelzvergasers sind Auslässe 21 für flüssiges Roheisen sowie 22 für flüssige Schlacke, ferner oberhalb des Schlackenspiegels wenigstens eine Düse 23 bzw. wenigstens ein Brenner 23a für das Einblasen von Gasen und feinkörnigen Feststoffen vorgesehen.

Unterhalb des Direktreduktionsschachtofens 2 befindet sich ein Kühlaggregat 13a für die durch die Austragvorrichtung 41 ausgetragenen heißen Eisenschwammpartikel. Die Eintrittsöffnung 46 des Kühlaggregates 13a für die heißen Eisenschwammpartikel steht durch die Fallrohrleitung 6 mit der Austragvorrichtung 41 in Verbindung. Der Fallrohrleitung 6 ist eine Niveaumeßeinrichtung 47 zugeordnet, durch die die Austragvorrichtung 41 steuerbar ist.

Das Kühlaggregat 13a weist im oberen Bereich neben der Eintrittsöffnung 46 für die heißen Eisenschwammpartikel einen Auslaß 48 für das Kühlgas und im unteren Bereich neben einer Austrittsöffnung 14 für die gekühlten Eisenschwammpartikel einen Einlaß 49 für das Kühlgas auf. Die Kühlung erfolgt wie bei dem Ausführungsbeispiel nach Fig. 1 im Gegenstrom und im direkten Austausch mit den im Kühlaggregat absinkenden Eisenschwammpartikeln. Da dem Kühlaggregat 13a nicht nur, wie bei dem Ausführungsbeispiel nach Fig. 1, die Grobkornfraktion der Eisenschwammpartikel zugeführt wird, ist es zweckmäßig, das Kühlaggregat im oberen Bereich mit einem Beruhigungsraum zu versehen, um den Austrag an Feinteilen möglichst gering zu halten. Dies kann beispielsweise dadurch geschehen, daß das Fallrohr 6 in einer bestimmten Länge in das Kühlaggregat eingeführt wird, so daß sich oberhalb des Schüttkegels innerhalb des Kühlaggregates ein Beruhigungsraum ausbildet.

Unterhalb des Kühlaggregates und mit dessen Austrittsöffnung 14 durch ein weiteres Fallrohr 48 verbunden, befindet sich eine als Siebstation ausgebildete Klassiervorrichtung 7a, durch die die Trennung der Eisenschwammpartikel in eine Feinkornfraktion und in eine Grobkornfraktion bewirkt wird. Die Austrittsöffnung 8 für die Feinkornfraktion ist durch die Rohrleitung 9 mit dem oberhalb des Einschmelzvergasers angeordneten Feinkornbehälter 10 verbunden, dessen Austrittsöffnung 16 mit dem Tauchrohr 17 in Verbindung steht. Alternativ oder zusätzlich kann auch eine Verbindung zu dem Rohr 15 vorhanden sein, über das die Kohle in den Einschmelzvergaser eingeführt wird. Falls die Klassiervorrichtung 7a aus Platzmangel nicht oberhalb des Einschmelzvergasers 1 angeordnet und die Rohrleitung 9 nicht als Fallrohrleitung ausgebildet sein kann, sind in dieser Rohrleitung geeignete Fördermittel für die Feinkornfraktion vorzusehen. Erfolgt die Trennung in der Klassiervorrichtung 7a so, daß die Feinkornfraktion nur Teile mit einer Körnung bis 3 mm enthält, dann kann es zweckmäßig sein, wenigstens einen Teil dieser Fraktion über die Düsen 23 bzw. 23a in den Einschmelzvergaser einzublasen. Es sind dann entsprechende Rohrleitungen zu den Düsen vorzusehen.

Mit der Austrittsöffnung 11 der Klassiervorrichtung 7a für die Grobkornfraktion, die aus dem Verfahren ausgeschieden wird, ist eine Rohrleitung 12 verbunden, durch die die Grobkornfraktion einem gesonderten Einschmelzaggregat oder einer Einrichtung zum Kompaktieren, Passivieren oder auch einem weiteren Kühlaggregat 13 entsprechend Fig. 1 zuführbar ist, dem aufbereitetes Gichtgas als Kühlmedium zugeführt wird.

Wie bei dem Ausführungsbeispiel nach Fig. 1 ist ein Gichtgaswäscher 28 mit dem Gichtgasauslaß 5 des Direktreduktionsschachtofens verbunden, und der Gasauslaß 51 des Gichtgaswäschers 28 steht über Rohrleitungen 52 und 53 mit einem CO$_2$-Absorptionsturm 29 in Verbindung, dessen Gasauslaß 54 über Leitungen 55 und 56 mit dem Einlaß 49 des Kühlaggregates 13a für das Kühlgas verbunden ist. Außerdem ist, wie bei dem ersten Ausführungsbeispiel, eine Rohrleitung 27 vom Gasauslaß 48 des Kühlaggregates 13a zur Reduktionsgasleitung 25 vorgesehen, um dem über diese Leitung zum Gaseinlaß 4 des Direktreduktionsschachtofens 2 geführten Reduktionsgasstrom aufbereitetes und im Kühlaggregat 13a erwärmtes Gichtgas beizumischen. Hierdurch wird nicht nur eine Temperatursteuerung des dem Direktreduktionsschachtofen 2 zugeführten Reduktionsgases ermöglicht, sondern es kann der Kohle- und Sauerstoffverbrauch im Einschmelzvergaser nahezu auf die Hälfte reduziert werden. Dadurch wird auch die mit Kohle eingetragene Schwefelmenge und der Schwefelgehalt im Reduktionsgas auf ca. die Hälfte reduziert.

Ergänzend zu der Anlage nach Fig. 1 sind bei der Anlage nach Fig. 4 noch die folgenden Vorrichtungen und Verbindungsleitungen vorgesehen.

Dem Kühlaggregat 13a ist ein die Rohrleitung 56 enthaltender Kühlgaskreislauf 57 mit einem Kühlgaswäscher 58 und einem Kompressor 30a zugeordnet. Hierdurch wird der Tatsache Rechnung getragen, daß für die Kühlung im Kühlaggregat eine größere Kühlgasmenge benötigt wird, als aufbereitetes, über die Rohrleitung 55 zugeführtes Gichtgas zur Verfügung steht.

Von der Rohrleitung 27, die mit dem Gasauslaß 48 des Kühlaggregates bzw. dem Kühlgaskreislauf 57 verbunden ist, zweigt eine Rohrleitung 59 zum Einlaß 44 im Vergaserkopf 42 ab, in die eine Verbindungsleitung 60 zum Gasauslaß 54 des CO$_2$-Absorptionsturms 29 mündet. Über die Rohrleitung 59 kann dem Vergaserkopf 42 aufbereitetes Gichtgas unterschiedlicher Temperatur zugeführt werden, so daß hier die Temperatur auf eine für die Heißgasentschwefelung optimale Temperatur einstellbar ist.

Der Auslaß 43 im Vergaserkopf 42 für das im Einschmelzvergaser 1 erzeugte Reduktionsgas ist über eine Rohrleitung 61 mit einem Zyklon 62 verbunden, an dessen Gasauslaß 63 die zum Direktreduktionsaggregat führende Reduktionsgasleitung 25 angeschlossen ist. Anstelle eines Zyklons können auch mehrere zu einer Zyklonbatterie zusammengeschaltete Zyklone eingesetzt werden. Die Austrittsöffnung 64 für die ausgeschiedenen Feststoffe steht durch eine Rohrleitung 65 mit einer Rohrleitung 66 in Verbindung, die über einen Kompressor 30 mit dem Gasauslaß 51 des Gichtgaswäschers 28 verbunden ist. Die Rohrleitung 66 führt einen Teil des den Gichtgaswäscher 28 verlassenden Gichtgases dem Brenner 23a als sauerstoffhaltiges Gas zu, wobei dieses Gas zugleich als Trägergas für die ausgeschiedenen Feststoffe des Zyklons 62 dient. Dem Brenner 23a bzw. den Düsen 23 ist außerdem über eine Rohrleitung 67 Sauerstoff zuführbar. Eine Zweigleitung 68 führt von der mit dem Gasauslaß 51 des Gichtgaswäschers 28 verbundene Rohrleitung 52 zu einem Dampferzeuger 69. Ein Teil des unaufbereiteten Gichtgases kann so als Heizgas für die Erzeugung von Dampf verwendet werden, der im CO$_2$-Absorptionsturm 29 benötigt wird.

Bei dem mit der Anlage nach Fig. 4 durchgeführten Verfahren ist neben der Forderung, eine Überschußmenge an im Einschmelzvergaser 1 erzeugtem Reduktionsgas zu vermeiden, in besonders wirtschaftlicher Weise auch die Forderung berücksichtigt, den Schwefelgehalt des im Einschmelzvergaser erschmolzenen Roheisens und in der aus dem Verfahren ausgeschiedenen Grobkornfraktion der Eisenschwammpartikel niedrig zu halten, wenn als Energieträger stark schwefelhaltige Kohle eingesetzt wird.

Zu diesem Zweck werden Maßnahmen vorgesehen, um den für das Einschmelzen der Feinkornfraktion im Einschmelzvergaser erforderlichen Energieanteil zu verringern und das Gichtgas des Direktreduktionsaggregates teilweise im unaufbereiteten Zustand, teilweise nach einer CO$_2$-Wäsche und nach direktem Wärmeaustausch im Kühlaggregat für die aus dem Direktreduktionsaggregat ausgetragenen Eisenschwammpartikel dem Prozeß zuzuführen.

Der für die Schmelzwärme erforderliche, durch Verbrennung von Kohle aufzubringende Energieanteil wird dadurch vermindert, daß bei der Trennung der Eisenschwammpartikel in der Klassiervorrichtung 7a der Anteil der Freinkornfraktion gegenüber der Grobkornfraktion vermindert, d. h. das Kornband der dem Einschmelzvergaser 1 zugeführten Feinkornfraktion auf Teilchen bis zu einer Größe von 5 mm, vorzugsweise 3 mm, reduziert wird. Diese Teilchen lassen sich wegen der längeren Verweilzeit in der Wirbelschicht des Einschmelzvergasers mit einem wesentlich niedrigeren Energieaufwand, d. h. also mit weniger Kohle und damit weniger Schwefel erschmelzen. Es ist dann auch möglich, einen Teil des vom Gichtgaswäscher 28 gelieferten unaufbereiteten Gichtgases, das Kohlendioxid und Wasserdampf enthält, zum Vergasen der Kohle einzusetzen. Bei dem Ausführungsbeispiel nach Fig. 4 wird ein Teil des Gichtgases über die Leitung 66 einem oder mehreren Brennern 23a des Einschmelzvergasers 1 zugeführt, die in das Kohlefließbett münden. Mit dem Gichtgas als Trägergas wird auch der Austrag des Zyklons 62, nämlich aus dem Reduktionsgas ausgeschiedene Kohlepartikel und Entschwefelungsmittel, in den Einschmelzvergaser zurückgeführt. Um die Einblasöffnung vom Verschlacken freizuhalten, wird dem Brenner über die Leitung 67 Sauerstoff oder Luft als Verbrennungsmittel zugeführt und ein Teil des Gichtgases bzw. des Gichtgas-Staubgemisches verbrannt. Die über die Rohrleitung 66 zugeführte Gichtgasmenge soll so eingestellt werden, daß die Vergaserkopftemperatur in Verbindung mit anderen Temperatursteuerungsmaßnahmen zwischen 850° und 1 250 °C, vorzugsweise bei 1 100 °C liegt. Durch die mögliche Verwendung von Gichtgas als Sauerstoffträger für die Durchführung der Vergasung läßt sich selbstverständlich auch der Sauerstoffverbrauch pro Tonne Produkt erniedrigen und damit die Wirtschaftlichkeit des Verfahrens erhöhen.

Eine weitere Einsparung an Kohle und damit eine weitere Reduzierung des Schwefelgehalts im Reduktionsgas und im Eisenschwamm läßt sich dadurch erzielen, daß im $CO_2$-Absorptionsturm aufbereitetes Gichtgas dem Reduktionsgas beigemischt wird. Dies geschieht bei dem Verfahren mit der Anlage nach Fig. 4 dadurch, daß ein Teil des im $CO_2$-Absorptionsturm 29 aufbereiteten Gichtgases über die Rohrleitungen 55 und 56 durch das Kühlaggregat 13a geleitet wird, dieser Teil sich im direkten Kontakt mit den heißen Eisenschwammpartikeln erwärmt und dann wiederum ein Teil hiervon der Reduktionsgasleitung 25 und ein weiterer Teil über die Rohrleitung 59 dem Vergaserkopf 42 zugeführt wird. Der andere Teil des vom $CO_2$-Absorptionsturm gelieferten aufbereiteten Gichtgases wird unmittelbar über die Rohrleitung 60 und einem Teil der Rohrleitung 59 dem Vergaserkopf 42 zugeführt. Durch die dem Reduktionsgas beigemischte Menge an aufbereitetem Gichtgas kann der Kohle- und Sauerstoffverbrauch und damit die mit Kohle eingetragene Schwefelmenge und der Schwefelgehalt im Reduktionsgas auf ca. die Hälfte reduziert werden.

Mit dem über die Rohrleitung 59 dem Vergaserkopf 42 zugeführten, aufbereiten Gichtgas wird auch eine Temperatursteuerung vorgenommen, wobei die Temperatur in der Leitung 59 durch den Anteil der über die Rohrleitung 27 und über die Rohrleitung 60 zugeführten Mengen bestimmt werden kann. Die Temperatureinstellung im Vergaserkopf ist insbesondere dann wesentlich, wenn diesem oder der Abgasleitung 61 ein Entschwefelungsmittel zugeführt wird, um den Schwefelgehalt im Reduktionsgas weiter zu senken. Die optimale Temperatur für eine Heißgasentschwefelung liegt bei ca. 900 °C. Bei dem beschriebenen Verfahren wird dem Vergaserkopf 42 über die Öffnung 45 ein Entschwefelungsmittel, wie Kalkhydrat, in feinkörniger Form zugeführt und die für die Heißgasentschwefelung optimale Temperatur durch das durch den Gaseinlaß 44 eingeblasene, aufbereitete Gichtgas eingestellt. Die Entschwefelung des Reduktionsgases erfolgt im wesentlichen im Vergaserkopf und in der Abgasleitung 61. Verbrauchtes und noch nicht verbrauchtes Entschwefelungsmittel wird im Zyklon 62 ausgeschieden und über die Leitung 65 in den Einschmelzvergaser zurückgeführt.

Durch die genannten Maßnahmen läßt sich auch beim Einsatz schwefelreicher Kohle der Schwefelgehalt der Eisenschwammpartikel so weit absenken, daß die ausgeschiedene Grobkornfraktion ohne weitere Maßnahmen zur Schwefelentfernung in einem Stahlwerk verarbeitet werden kann. Die Feinkornfraktion, die aus den genannten Gründen einen wesentlich höheren Schwefelgehalt als die Grobkornfraktion besitzt — wegen der im Verhältnis zum Gewicht größeren Oberfläche wird durch die feinen Eisenschwammpartikel eine größere Schwefelmenge gebunden —, wird durch die dem Einschmelzvergaser zugeführten Entschwefelungsmittel wenigstens zum Teil entschwefelt und gebunden an das Entschwefelungsmittel durch die Schlacke ausgeschieden.

## Patentansprüche

1. Verfahren zur direkten Erzeugung von Eisenschwammpartikeln und flüssigem Roheisen aus stückigem Eisenerz, bei dem das Eisenerz in einem Direktreduktionsaggregat in Form einer losen Schüttung mittels eines heißen Reduktionsgases zu Eisenschwammpartikeln reduziert wird und aus dem Direktreduktionsaggregat ausgetragene Eisenschwammpartikel einem Einschmelzvergaser zugeführt werden, in dem aus eingebrachter Kohle und eingeblasenem sauerstoffhaltigem Gas die zum Schmelzen des Eisenschwamms erforderliche Wärme sowie Reduktionsgas erzeugt werden, von dem wenigstens ein Teil nach einer Abkühlung auf die für die Reduktion vorgeschriebene Temperatur in die Reduktionszone des Direktreduktionsaggregates eingeleitet wird, dadurch gekennzeichnet, daß die aus dem Direktreduktionsaggregat ausgetragenen Eisenschwammpartikel in eine Feinkornfraktion und in eine Grobkornfraktion getrennt werden und dem Einschmelzvergaser nur die Feinkornfraktion zugeführt wird.

2. Verfahren nach Anspruch 1, dadurch gekennzeichnet, daß die Feinkornfraktion Teilchen bis zu einer Größe von 20 mm enthält.

3. Verfahren nach Anspruch 2, dadurch gekennzeichnet, daß die Feinkornfraktion Teilchen bis zu einer Größe von 12 mm enthält.

4. Verfahren nach Anspruch 1, dadurch gekennzeichnet, daß die obere Grenze für die Teilchengröße der Feinkornfraktion so gewählt ist, daß die Menge des beim Einschmelzen der Eisenschwammpartikel im Einschmelzvergaser erzeugten Reduktionsgases etwa der für den Reduktionsprozess des Eisenerzes im Direktreduktionsaggregat erforderlichen Menge entspricht.

5. Verfahren nach einem der Ansprüche 1 bis 4, dadurch gekennzeichnet, daß die Eisenschwammpartikel der Feinkornfraktion benachbart zur Obergrenze des sich in dem Einschmelzvergaser ausbildenden Fließbettes mit abgebremster Vertikalgeschwindigkeitskomponente zugeführt werden.

6. Verfahren nach Anspruch 5, dadurch gekennzeichnet, daß die Eisenschwammpartikel durch wenigstens ein Rohr zugeführt werden.

7. Verfahren nach einem der Ansprüche 1 bis 6, dadurch gekennzeichnet, daß die Trennung zwischen Feinkorn- und Grobkornfraktion so gewählt ist, daß der mittlere Schwefelgehalt der Feinkornfraktion wenigstens dem Fünffachen des mittleren Schwefelgehalts der Grobkornfraktion entspricht.

8. Verfahren nach Anspruch 7, dadurch gekennzeichnet, daß der mittlere Schwefelgehalt der Feinkornfraktion wenigstens dem Zehnfachen des mittleren Schwefelgehalts der Grobkornfraktion entspricht.

9. Verfahren nach Anspruch 7 oder 8, dadurch gekennzeichnet, daß das Kornband der Feinkornfraktion im wesentlichen Teilchen bis zu einer Größe von 5 mm enthält.

10. Verfahren nach Anspruch 9, dadurch gekennzeichnet, daß das Kornband der Feinkornfraktion im wesentlichen Teilchen bis zu einer Größe von 3 mm enthält.

11. Verfahren nach einem der Ansprüche 1 bis 10, dadurch gekennzeichnet, daß dem im Einschmelzvergaser erzeugten Reduktionsgas ein Entschwefelungsmittel zugeführt wird.

12. Verfahren nach Anspruch 11, dadurch gekennzeichnet, daß das Entschwefelungsmittel in den Kopf und/oder in die Abgasleitung des Einschmelzvergasers für das Reduktionsgas eingeblasen wird.

13. Verfahren nach einem der Ansprüche 1 bis 12, dadurch gekennzeichnet, daß dem im Einschmelzvergaser erzeugten Reduktionsgas ein Teil des Gichtgases des Direktreduktionsaggregates zugemischt wird, nachdem dieses in einem Gichtgaswäscher gewaschen und gekühlt und durch Entfernung von $CO_2$ aufbereitet worden ist.

14. Verfahren nach Anspruch 13, dadurch gekennzeichnet, daß wenigstens ein Teil des gewaschenen und aufbereiteten Gichtgases im direkten Wärmetausch mit aus dem Direktreduktionsaggregat ausgetragenen Eisenschwammpartikeln erwärmt wird, bevor es dem Reduktionsgas zugemischt wird.

15. Verfahren nach Anspruch 13 oder 14, dadurch gekennzeichnet, daß aufbereitetes Gichtgas in den Kopf des Einschmelzvergasers eingeblasen wird.

16. Verfahren nach einem der Ansprüche 13 bis 15, dadurch gekennzeichnet, daß aufbereitetes Gichtgas in die Reduktionsgasleitung vom Einschmelzvergaser zum Direktreduktionsaggregat eingeblasen wird.

17. Verfahren nach einem der Ansprüche 14 bis 16, dadurch gekennzeichnet, daß der direkte Wärmetausch des gewaschenen und aufbereiteten Gichtgases mit den Eisenschwammpartikeln in einem Kühlaggregat erfolgt, in das die aus dem Direktreduktionsaggregat ausgetragenen heißen Eisenschwammpartikel über ein Fallrohr befördert werden.

18. Verfahren nach Anspruch 17, dadurch gekennzeichnet, daß die Trennung der Eisenschwammpartikel in die Feinkorn- und in die Grobkornfraktion nach dem direkten Wärmetausch mit dem aufbereiteten Gichtgas erfolgt.

19. Verfahren nach einem der Ansprüche 1 bis 18, dadurch gekennzeichnet, daß die Eisenschwammpartikel der Grobkornfraktion durch abgekühltes, gereinigtes und aufbereitetes Gichtgas aus dem Direktreduktionsaggregat gekühlt werden.

20. Verfahren nach einem der Ansprüche 1 bis 19, dadurch gekennzeichnet, daß dem Einschmelzvergaser ein Teil des Gichtgases des Direktreduktionsaggregates nach dem Waschen und Kühlen in einem Gichtgaswäscher als Sauerstoffträger bzw. als Vergasungsmittel zugeführt wird.

21. Verfahren nach Anspruch 20, dadurch gekennzeichnet, daß im Einschmelzvergaser eine Wirbelschicht gebildet und das Gichtgas in diese eingeblasen wird.

22. Verfahren nach einem der Ansprüche 1 bis 21, dadurch gekennzeichnet, daß das im Einschmelzvergaser erzeugte Reduktionsgas in wenigstens einem Zyklon entstaubt wird, bevor es dem Direktreduktionsaggregat zugeführt wird und wenigstens ein Teil der im Zyklon ausgeschiedenen und aus ihm ausgetragenen Feststoffteilchen in den Einschmelzvergaser zurückgeführt wird.

23. Verfahren nach Anspruch 21 und 22, dadurch gekennzeichnet, daß der Zyklonaustrag mit dem Gichtgas als Fördergas in den Einschmelzvergaser eingeblasen wird.

24. Verfahren nach Anspruch 23, dadurch gekennzeichnet, daß der Zyklonaustrag mit dem Gichtgas nach Beimischung von Sauerstoff oder Luft über wenigstens einen Brenner in den Einschmelzvergaser eingeblasen wird.

25. Anlage zur Durchführung des Verfahrens nach einem der Ansprüche 1 bis 24 mit einem oberhalb eines Einschmelzvergasers angeordneten Direktreduktionsaggregat, das am unteren Ende eine Austragvorrichtung für heißen Eisenschwamm aufweist, deren Austrittsöffnung mit dem Einschmelzvergaser durch wenigstens eine Verbindungsleitung in Verbindung steht, dadurch gekennzeichnet, daß in die Verbindungsleitung zwischen Direktreduktionsaggregat (2) und Einschmelzvergaser (1) ein Grobkornabscheider (7) eingefügt ist, dessen Austrittsöffnung (8) für die Feinkornfraktion mit dem Einschmelzvergaser (1) und dessen Austrittsöffnung (11) für die Grobkornfraktion mit einem gesonderten Einschmelzaggregat oder mit einer Einrichtung (13) zum Heißkompaktieren, Passivieren oder Kühlen verbunden ist.

26. Anlage nach Anspruch 25, dadurch gekennzeichnet, daß der Grobkornabscheider (7) in Form einer schrägen Fallrinne (38) mit wenigstens einem von dieser nach unten abzweigenden Stützen (39) ausgebildet ist, in der sich bei der Förderung des Schüttgutes die feinen Partikel unten absetzen und über den Stützen dosiert abziehbar sind, während die groben Partikel weitergeleitet werden.

27. Anlage nach Anspruch 25 dadurch gekennzeichnet, daß der Grobkornabscheider (7) ein thermisch belastbares Sieb oder einen Rost enthält.

28. Anlage nach Anspruch 27, dadurch gekennzeichnet, daß das Sieb bzw. der Rost durch einen Vibrator in Schwingungen versetzbar ist.

29. Anlage nach einem der Ansprüche 25 bis 28, dadurch gekennzeichnet, daß die Austrittsöffnung (8) des Grobkornabscheiders (7) für die Feinkornfraktion durch wenigstens ein Rohr (9) mit einem Behälter (10) in Verbindung steht, der eine Austragvorrichtung enthält, die durch wenigstens ein Fallrohr (17) mit dem Einschmelzvergaser (1) verbunden ist.

30. Anlage nach Anspruch 29, dadurch gekennzeichnet, daß das Fallrohr (17) von oben in den Innenraum des Einschmelzvergasers (1) bis in die Nähe der Obergrenze des sich in dem Einschmelzvergaser ausbildenden Kohlefließbettes eintaucht und im Rohr kaskadenförmige Vorsprünge (35) und/oder am unteren Ende des Rohres ein Prallblech (36) vorgesehen sind.

31. Anlage nach Anspruch 30, dadurch gekennzeichnet, daß das Prallblech (36) in Form eines stumpfen Kegels ausgebildet ist.

32. Anlage zur Durchführung des Verfahrens nach einem der Ansprüche 1 bis 24, mit einem Direktreduktionsschachtofen (2), der oben eine Eintragvorrichtung (3) für das stückige Eisenerz und einen Gasauslaß (5) für das verbrauchte Reduktionsgas (Gichtgas) und unten eine Austragvorrichtung (41) für die durch Direktreduktion aus dem Einsenerz gewonnenen Eisenschwammpartikel sowie einen Gaseinlaß (4) für heißes Reduktionsgas aufweist, einem Einschmelzvergaser (1), der im oberen Bereich Öffnungen (17, 15, 45) für die Zugabe von Eisenschwammpartikeln, Kohle und Zuschlägen sowie einen Gasauslaß (43) für erzeugtes Reduktionsgas (Rohgas) und im unteren Bereich Auslässe (21, 22) für flüssiges Roheisen und flüssige Schlacke, ferner oberhalb des Schlackenspiegels wenigstens eine Düse bzw. einen Brenner (23, 23a) für das Einblasen von Gasen und feinkörnigen Feststoffen zur Bildung einer Vergasungszone aufweist, einem Kühlaggregat (13a) für heiße Eisenschwammpartikel, das oben eine Eintrittsöffnung (46) für die heißen Eisenschwammpartikel und einen Auslaß (48) für das Kühlgas und unten eine Austrittsöffnung (14) für die gekühlten Eisenschwammpartikel sowie einen Einlaß (49) für das Kühlgas enthält, ferner mit einem mit dem Gichtgasauslaß (5) des Direktreduktionsschachtofens (2) verbundenen Gichtgaswäscher (28), sowie mit Rohrleitungen zum Verbinden der einzelnen Aggregate, mit Ventilen und Kompressoren, dadurch gekennzeichnet, daß eine Klassiervorrichtung (7a) zum Trennen der Eisenschwammpartikel vorgesehen ist, mit einer Austrittsöffnung (8) für eine Feinkornfraktion, welche durch eine Rohrleitung (9) mit einer oberen Öffnung (17) des Einschmelzvergasers (1) verbunden ist, sowie mit einer Austrittsöffnung (11) für eine Grobkornfraktion.

33. Anlage zur Durchführung des Verfahrens nach Anspruch 32, dadurch gekennzeichnet, daß der Gasauslaß (51) des Gichtgaswäschers (28) mit der Düse (23a) im unteren Abschnitt des Einschmelzvergasers (1) in Verbindung steht.

34. Anlage nach Anspruch 32 oder 33, dadurch gekennzeichnet, daß die Eintrittsöffnung (46) des Kühlaggregates (13a) durch eine Fallrohrleitung (6) mit der Austragvorrichtung (41) des Direktreduktionsschachtofens (2) und die Austrittsöffnung (14) des Kühlaggregates (13a) mit der Klassiereinrichtung (7a) verbunden ist.

35. Anlage nach einem der Ansprüche 32 bis 34, dadurch gekennzeichnet, daß der Gasauslaß (51) des Gichtgaswäschers (28) mit einem $CO_2$-Abscheider (29) in Verbindung steht und der Kühlgaseinlaß (49) des Kühlaggregates (13a) mit dem Gasauslaß (54) des $CO_2$-Abscheiders (29) und der Kühlgasauslaß (48) des Kühlaggregates mit einer Einblasdüse (44) im Kopf (42) oder in der Abgasleitung (61) des Einschmelzvergasers (1) verbunden ist.

36. Anlage nach einem der Ansprüche 32 bis 35, dadurch gekennzeichnet, daß der Gasauslaß (43) für das im Einschmelzvergaser (1) erzeugte Reduktionsgas mit wenigstens einem Zyklon (62) verbunden ist und die Austrittsöffnung (64) für die ausgeschiedenen Feststoffe des Zyklons mit der Rohrleitung (66) vom Gichtgaswäscher (28) zur unteren Einblasdüse (23a) des Einschmelzvergasers (1) in Verbindung steht.

## Claims

1. Process for directly producing sponge iron particles and liquid pig iron from pieces of iron ore, in which the iron ore is reduced in a direct reduction assembly in the form of a loose filling by means of a hot reducing gas to sponge iron particles, and sponge iron particles carried out of the direct reduction assembly are fed to a melt-down gasifier, in which the heat necessary for melting the pig iron and also reduction gas are produced from introduced coal and oxygen-containing gas which is blown in of which at least a part is led after cooling to a temperature prescribed for the reduction into the reduction zone of the direct reduction assembly, characterised in that the pig iron particles carried out of the direct reduction assembly are divided into a fine grain fraction and a coarse grain fraction and only the fine grain fraction is fed to the melt-down gasifier.

2. Process according to claim 1, characterised in that the fine grain fraction contains particles up to a size of 20 mm.

3. Process according to claim 2, characterised in that the fine grain fraction contains particles up to a size of 12 mm.

4. Process according to claim 1, characterised in that the upper limit for the particle size of the fine grain fraction is so selected that the amount of the reduction gas produced by melting down the pig iron particles in the melt-down gasifier corresponds roughly to the amount required for the reduction process for the iron ore in the direct reduction assembly.

5. Process according to any of claims 1 to 4, characterised in that the pig iron particles of the fine grain fraction adjacent to the upper face of the fluidized bed formed in the melt-down gasifier are fed with limited vertical component of velocity.

6. Process according to claim 5, characterised in that the pig iron particles are fed in by at least one tube.

7. Process according to any of claims 1 to 6, characterised in that the division between fine grain fraction and coarse grain fraction is so selected that the average sulphur content of the fine grain fraction amounts to at least five times the average sulphur content of the coarse grain fraction.

8. Process according to claim 2, characterised in that the average sulphur content of the fine grain fraction amounts to at least ten times the average sulphur content of the coarse grain fraction.

9. Process according to claims 7 and 8, characterised in that the fine grain fraction contains a substantial proportion of particles up to a size of 5 mm.

10. Process according to claim 9 characterised in that the fine grain fraction contains a substantial proportion of particles up to a size of 3 mm.

11. Process according to any of claims 1 to 10 characterised in that the reduction gas produced in the melt-down gasifier is fed with a sulphur extraction agent.

12. Process according to claim 11, characterised in that the sulphur extraction agent is blown into the head and/or the exhaust duct of the melt-down gasifier for the reduction gas.

13. Process according to any of claims 1 to 12 characterised in that a part of the top gas of the direct reduction assembly is mixed with the reduction gas produced in the melt-down gasifier, after being scrubbed in a top gas scrubber and cooled and prepared by extracting $CO_2$.

14. Process according to claim 13, characterised in that at least a part of the scrubbed and prepared top gas is heated by direct heat exchange with sponge iron particles being carried out of the direct reduction assembly, before it is mixed with the reduction gas.

15. Process according to claim 13 or 14, characterised in that the prepared top gas is blown into the head of the melt-down gasifier.

16. Process according to claim 13 to 15, characterised in that the prepared top gas is blown into the reduction gas duct between the melt-down gasifier and the direct reduction assembly.

17. Process according to any of claims 14 to 16 characterised in that the direct heat exchange of the scrubbed and prepared top gas with the sponge iron particles is effected in a cooling assembly into which the hot sponge iron particles being carried out of the direct reduction assembly are transported via a downpipe.

18. Process according to claim 17, characterised in that the separation of the sponge iron particles into fine grain and coarse grain fractions is effected after the direct heat exchange with the prepared top gas.

19. Process according to claim 1 to 18, characterised in that the sponge iron particles of the coarse grain fraction are cooled by cooled, cleaned and prepared top gas from the direct reduction assembly.

20. Process according to claims 1 to 19, characterised in that a part of the top gas of the direct reduction assembly is fed after scrubbing and cooling in a top gas scrubber to the melt-down gasifier as an oxygen carrier or gasifying agent.

21. Process according to claim 20, characterised in that a fluidized layer is formed in the melt-down gasifier and the top gas blown into it.

22. Process according to any of claims 1 to 21, characterised in that the reduction gas produced in the melt-down gasifier is freed of dust in at last one cyclone before it is fed to the direct reduction assembly and at least a part of the solid particles separated in the cyclone and removed therefrom is fed back into the melt-down gasifier.

23. Process according to claim 21 to 22, characterised in that the cyclone extract is blown together with the top gas as a feed gas into the melt-down gasifier.

24. Process according to claim 23, characterised in that the cyclone extract is blown, with the top gas after mixing with oxygen or air, into the melt-down gasifier via at least one burner.

25. Plant for carrying out the process of any of claims 1 to 24, having a direct reduction assembly arranged above a melt-down gasifier, which has at its lower end an extractor device for hot sponge iron, of which the outlet opening is connected to the melt-down gasifier through at least one connector duct, characterised in that a coarse grain separator (7) is inserted into the connector duct between the direct reduction assembly (2) and the melt-down gasifier (1), of which separator the outlet opening (8) for the fine grain fraction is connected with the melt-down gasifier (1) and the outlet opening (11) for the coarse grain fraction with a special melt-down assembly or with a device (13) for heat compacting it, rendering it inert or cooling it.

26. A plant according to claim 25, characterised in that the coarse grain separator (7) is provided in the form of an inclined drop channel (38) with at least one nozzle (39) branching off downwardly from it, in which the fine particles are removed downwardly at the conveyance of the bulk material and are extractable in measured amounts via the nozzle (39), while the coarse particles are conveyed further on.

27. A plant according to claim 25, characterised in that the coarse grain separator (7) includes a thermally resistant sieve or a grill.

28. A plant according to claim 27, characterised in that the sieve or grill can be set in oscillation by a vibrator.

29. A plant according to any of claims 25 to 28, characterised in that the outlet opening (8) of the coarse grain separator (7) for the fine grain fraction is connected via at least one pipe (9) with a container (10), which includes an extractor device which is connected by at least one down pipe (17) with the melt-down gasifier.

30. A plant according to claim 29, characterised in that the pipe (17) projects from above into the interior of the melt-down gasifier (1) as far as the neighbourhood of the upper boundary of the fluidized bed of coal formed in the melt-down gasifier, and cascade-form projections (35) and/or a baffle plate (36) at the lower end of the pipe and provided.

31. A plant according to claim 30, characterised in that the baffle plate (36) is in the form of a truncated cone.

32. A plant for carrying out the process according to any of claims 1 to 24, having a direct reduction shaft furnace (2) which at the top has an inlet device (3) for the particulate iron ore and a gas outlet (5) for the used reduction gas (top gas) and, below, has an extractor device (41) for the sponge iron particles produced by direct reduction from the iron ore, and also a gas inlet (4) for hot reduction gas, a melt-down gasifier (1), which has, in its upper region, openings (17, 15, 45) for admitting sponge iron particles, coal and additives as well as a gas outlet (43) for produced reduction gas (raw gas) and in its lower region outlets (21, 22) for liquid pig iron and liquid slag, and, above the slag level, at least one nozzle or burner (23, 23a) for blowing in gas and fine grain solids to form a gasifying zone, a cooling assembly (13a) for hot sponge iron particles, which includes an inlet opening (46) at the top for the hot sponge iron particles and an outlet (48) for the cooling gas and, below, an outlet opening (14) for the cooled sponge iron particles and also an inlet (49) for the cooling gas, also having a top gas scrubber (28) connected with the top gas outlet (5) of the direct reduction shaft furnace (2), and also having pipes connecting the individual assemblies, with valves and compressors, characterised in that a classifying device (7a) is provided for separating the sponge iron particles, having an outlet opening (8) for a fine grain fraction, which is connected by a pipe (9) to an upper opening (17) of the melt-down gasifier (1), and an outlet opening (11) for a coarse grain fraction.

33. A plant for carrying out the process according to claim 32, characterised in that the gas outlet (51) of the top gas scrubber (28) is connected to the nozzle (23a) in the lower section of the melt-down gasifier (1).

34. A plant according to claim 32 or 33, characterised in that the inlet opening (46) of the cooling assembly (13a) is connected by a down pipe (6) to the extractor device (41) of the direct reduction shaft furnace (2) and the outlet opening (14) of the cooling assembly (13a) is connected to the classifying device (7a).

35. A plant according to any of claims 32 to 34, characterised in that the gas outlet (51) of the top gas scrubber (28) is connected to a $CO_2$ separator (2a) and the cooling gas inlet (49) of the cooling assembly (13a) is connected with the gas outlet (54) of the $CO_2$ separator (29) and the cooling gas outlet (48) of the cooling assembly is connected with an inlet nozzle (44) in the head (42) or in the exhaust duct (61) of the melt-down gasifier (1).

36. A plant according to any of claims 32 to 35, characterised in that the gas outlet (43) for the reduction gas produced in the melt-down gasifier (1) is connected to at least one cyclone (62) and the outlet opening (64) for the precipitated solids of the cyclone is connected to the pipe duct (16) from the top gas scrubber (28) to the lower inlet nozzle (23a) of the melt-down gasifier (1).

## Revendications

1. Procédé de production directe de particules d'éponge de fer et de fonte liquide à partir de minerai de fer en morceaux, qui consiste à réduire le minerai de fer, sous la forme d'un tas lâche, en particules d'éponge de fer au moyen d'un gaz réducteur chaud dans un appareillage de réduction directe, et à envoyer les particules d'éponge de fer déchargées de l'appareillage de réduction directe à un gazéificateur de fusion dans lequel sont produits, à partir du charbon qui est chargé et du gaz contenant de l'oxygène qui y est insufflé, la chaleur nécessaire à la fusion de l'éponge de fer, ainsi que du gaz réducteur dont au moins une partie est envoyée, après un refroidissement à la température prescrite pour la réduction, à la zone de réduction de l'appareillage de réduction directe, caractérisé en ce qu'il consiste à séparer les particules d'éponge de fer, déchargées de l'appareillage de réduction directe, en une fraction de granulométrie fine et en une fraction de granulométrie grossière, et à n'envoyer au gazéificateur de fusion que la fraction de granulométrie fine.

2. Procédé suivant la revendication 1, caractérisé en ce que la fraction de granulométrie fine contient des particules ayant une dimension allant jusqu'à 20 mm.

3. Procédé suivant la revendication 2, caractérisé en ce que la fraction de granulométrie fine contient des particules ayant une dimension allant jusqu'à 12 mm.

4. Procédé suivant la revendication 1, caractérisé en ce qu'il consiste à choisir la limite supérieure de la dimension des particules de la fraction de granulométrie fine de manière à ce que la quantité du gaz réducteur produit lors de la fusion des particules d'éponge de fer dans le gazéificateur de fusion corresponde à peu près à la quantité qui est nécessaire pour le processus de réduction du minerai de fer dans l'appareillage de réduction directe.

5. Procédé suivant l'une des revendications 1 à 4, caractérisé en ce qu'il consiste à amener les particules d'éponge de fer de la fraction de granulométrie fine au voisinage de la limite supérieure du lit fluidisé se formant dans le gazéificateur de fusion, en leur donnant une composante de vitesse verticale très ralentie.

6. Procédé suivant la revendication 5, caractérisé en ce qu'il consiste à amener les particules d'éponge de fer par au moins un tuyau.

7. Procédé suivant l'une des revendications 1 à 6, caractérisé en ce qu'il consiste à choisir la séparation entre la fraction de granulométrie fine et la fraction de granulométrie grossière, de manière à ce que la teneur moyenne en soufre de la fraction de granulométrie fine représente au moins cinq fois la teneur moyenne en soufre de la fraction de granulométrie grossière.

8. Procédé suivant la revendication 7, caractérisé en ce que la teneur moyenne en soufre de la fraction de granulométrie fine représente au moins dix fois la teneur moyenne en soufre de la fraction de granulométrie grossière.

9. Procédé suivant la revendication 7 ou 8, caractérisé en ce que la plage granulométrique de la fraction de granulométrie fine contient essentiellement des particules ayant une dimension allant jusqu'à 5 mm.

10. Procédé suivant la revendication 9, caractérisé en ce que la plage granulométrique de la fraction de granulométrie fine contient, pour l'essentiel, des particules ayant une dimension allant jusqu'à 3 mm.

11. Procédé suivant l'une des revendications 1 à 10, caractérisé en ce qu'il consiste à envoyer un agent de désulfuration dans le gaz réducteur produit dans le gazéificateur de fusion.

12. Procédé suivant la revendication 11, caractérisé en ce qu'il consiste à insuffler l'agent de désulfuration en tête et/ou dans le conduit d'évacuation du gaz réducteur, du gazéificateur de fusion.

13. Procédé suivant l'une des revendications 1 à 12, caractérisé en ce qu'il consiste à ajouter au gaz réducteur produit dans le gazéificateur de fusion une partie du gaz de gueulard de l'appareillage de réduction directe, après l'avoir lavé et refroidi dans un laveur de gaz de gueulard et après l'avoir traité en le débarrassant du $CO_2$.

14. Procédé suivant la revendication 13, caractérisé en ce qu'il consiste à chauffer au moins une partie du gaz de gueulard lavé et traité, par échange de chaleur directe avec les particules d'éponge de fer déchargées de l'appareillage de réduction directe, avant de le mélanger au gaz réducteur.

15. Procédé suivant la revendication 13 ou 14, caractérisé en ce qu'il consiste à insuffler le gaz de gueulard traité en tête du gazéificateur de fusion.

16. Procédé suivant l'une des revendications 13 à 15, caractérisé en ce qu'il consiste à insuffler le gaz de gueulard traité dans le conduit pour le gaz réducteur allant du gazéificateur de fusion à l'appareillage de réduction directe.

17. Procédé suivant l'une des revendications 14 à 16, caractérisé en ce qu'il consiste à effectuer l'échange de chaleur directe entre le gaz de gueulard lavé et traité et les particules d'éponge de fer dans un appareillage de refroidissement dans lequel les particules d'éponge de fer chaudes, déchargées de l'appareillage de réduction directe, sont transportées par un tuyau de descente.

18. Procédé suivant la revendication 17, caractérisé en ce qu'il consiste à effectuer la séparation des particules d'éponge de fer en la fraction de granulométrie fine et en la fraction de granulométrie grossière, après l'échange de chaleur directe avec le gaz de gueulard traité.

19. Procédé suivant l'une des revendications 1 à 18, caractérisé en ce qu'il consiste à refroidir les particules d'éponge de fer de la fraction de granulométrie grossière par du gaz de gueulard refroidi, épuré et traité provenant de l'appareillage de réduction directe.

20. Procédé suivant l'une des revendications 1 à 19, caractérisé en ce qu'il consiste à envoyer à titre de source d'oxygène ou d'agent de gazéification, au gazéificateur de fusion, une partie du gaz de gueulard de l'appareillage de réduction directe, après le lavage et le refroidissement dans un laveur de gaz de gueulard.

21. Procédé suivant la revendication 20, caractérisé en ce qu'il consiste à former un lit fluidisé dans le gazéificateur de fusion et à y insuffler le gaz de gueulard.

22. Procédé suivant l'une des revendications 1 à 21, caractérisé en ce qu'il consiste à dépoussiérer dans au moins un cyclone le gaz réducteur produit dans le gazéificateur de fusion avant de l'envoyer à l'appareillage de réduction directe, et à recycler au gazéificateur de fusion au moins une partie des particules de matière solide séparées dans le cyclone et déchargées de celui-ci.

23. Procédé suivant la revendication 21 ou 22, caractérisé en ce qu'il consiste à insuffler la matière déchargée du cyclone avec le gaz de gueulard, à titre de gaz de transport, dans le gazéificateur de fusion.

24. Procédé suivant la revendication 23, caractérisé en ce qu'il consiste à insuffler, dans le gazéificateur de fusion, par au moins un brûleur, la matière déchargée du cyclone avec le gaz de gueulard, après mélange à de l'oxygène ou à de l'air.

25. Installation pour effectuer le procédé suivant l'une des revendications 1 à 24, comprenant un appareillage de réduction directe disposé au-dessus d'un gazéificateur de fusion et présentant, à l'extrémité inférieure, un dispositif de déchargement pour l'éponge de fer chaude, dont l'ouverture de sortie communique avec le gazéificateur de fusion par au moins un conduit de mise en communication, caractérisée en ce que, dans le conduit de mise en communication de l'appareillage de réduction directe (2) et du gazéificateur de fusion (1), est monté un séparateur de granulométrie grossière (7) dont l'ouverture de sortie (8) pour la fraction de granulométrie fine communique avec le gazéificateur de fusion (1) et dont l'ouverture de sortie (11) pour la fraction de granulométrie grossière communique avec un équipement de fusion distinct ou avec un dispositif (13) de compactage à chaud, de passivation ou de refroidissement.

26. Installation suivant la revendication 25, caractérisée en ce que le séparateur de granulométrie grossière (7) affecte la forme d'une goulotte de descente (38) inclinée, ayant au moins un raccord (39) bifurquant vers le bas dans lequel, lors du transport du produit en vrac, les particules fines se déposent vers le bas et peuvent être retirées de manière dosée par le raccord, tandis que les particules grossières continuent leur trajet.

27. Installation suivant la revendication 25, caractérisée en ce que le séparateur de granulométrie grossière (7) contient un tamis ou une grille pouvant être chargé thermiquement.

28. Installation suivant la revendication 27, caractérisée en ce que le tamis ou la grille peut être mis en oscillation par un vibreur.

29. Installation suivant l'une des revendications 25 à 28, caractérisée en ce que l'ouverture de sortie (8) de la fraction de granulométrie fine du séparateur de granulométrie grossière (7) communique, par au moins un tuyau (9), avec un récipient (10) qui contient un dispositif de déchargement qui communique avec le gazéificateur de fusion (1) par au moins un tuyau de descente (17).

30. Installation suivant la revendication 29, caractérisée en ce que le tuyau de descente (17) pénètre par le haut à l'intérieur du gazéificateur de fusion (1) jusqu'à proximité de la limite supérieure du lit fluidisé de charbon se formant dans le gazéificateur de fusion, et il est prévu, dans le tuyau, des parties en saillie (35) en forme de cascade et/ou à l'extrémité inférieure du tuyau, une tôle de rebondissement (36).

31. Installation suivant la revendication 30, caractérisée en ce que la tôle de rebondissement (36) affecte la forme d'un cône tronqué.

32. Installation pour effectuer le procédé suivant l'une des revendications 1 à 25, comprenant un four de réduction directe (2) qui présente, en haut, un dispositif de chargement (3) du minerai de fer en morceaux, et une sortie (5) pour le gaz réducteur usé (gaz de gueulard) et, en dessous, un dispositif de déchargement (41) des particules de mousse de fer obtenues par la réduction directe du minerai de fer, ainsi qu'une entrée (4) pour le gaz réducteur chaud, un gazéificateur de fusion (1) qui présente, dans la partie supérieure, des ouvertures (17, 15, 45) pour l'amenée de particules d'éponge de fer, de charbon et d'additifs, ainsi qu'une sortie (43) pour le gaz réducteur produit (gaz brut), et dans la région inférieure, des sorties (21, 22) pour la fonte liquide et pour le laitier liquide et, en outre, au-dessus du niveau du laitier, au moins une buse ou un brûleur (23, 23a) pour l'insufflation de gaz et de matières solides de granulométrie fine, en vue de former une zone de gazéification, un appareillage de refroidissement (13a) des particules d'éponge de fer chaudes qui présente, en haut, une ouverture d'entrée (46) des particules d'éponge de fer chaudes, et une sortie (48) du gaz de refroidissement et, en bas, une ouverture de sortie (14) des particules d'éponge de fer refroidies, ainsi qu'une entrée (49) pour le gaz de refroidissement, et, en outre, un laveur de gaz de gueulard (28) communiquant avec la sortie pour le gaz de gueulard (5) du four à cuve de réduction directe (2), ainsi que des conduits pour mettre en communication les divers appareillages avec des vannes et des compresseurs, caractérisée en ce qu'il est prévu un dispositif de triage (7a) destiné à séparer les particules d'éponge de fer et comprenant une ouverture de sortie (8) pour une fraction de granulométrie fine, qui communique par un conduit (9) avec une ouverture (17) supérieure du gazéificateur de fusion (1), ainsi qu'une ouverture de sortie (11) pour une fraction granulométrique grossière.

33. Installation pour effectuer le procédé suivant la revendication 32, caractérisé en ce que la sortie pour le gaz (51) du laveur de gaz de gueulard (28) communique avec la buse (23a) dans la section inférieure du gazéificateur de fusion (1).

34. Installation suivant la revendication 32 ou 33, caractérisée en ce que l'ouverture d'entrée (46) de l'appareillage de refroidissement (13a) communique par un conduit de descente (6) avec le dispositif de déchargement (41) du four à cuve de réduction directe (2), et l'ouverture de sortie (14) de l'appareillage de refroidissement (13a) communique avec le dispositif de triage (7a).

35. Installation suivant l'une des revendications 32 à 34, caractérisée en ce que la sortie (51) pour le gaz du laveur de gaz de gueulard (28) communique avec un séparateur de $CO_2$ (29) et l'entrée pour le gaz de refroidissement (49) de l'appareillage de refroidissement (13a) communique avec la sortie pour le gaz (54) du séparateur de CO$_2$ (29) et la sortie pour le gaz de refroidissement (48) de l'appareillage de refroidissement communique avec une buse d'insufflation (44) ménagée dans la tête (42) ou dans le conduit d'évacuation du gaz résiduaire (61) du gazéificateur de fusion (1).

36. Installation suivant l'une des revendications 32 à 35, caractérisée en ce que la sortie (43) pour le gaz réducteur produit dans le gazéificateur de fusion (1) communique avec au moins un cyclone (62) et l'ouverture de sortie (64) de la matière solide séparée du cyclone communique avec le conduit (66) allant du laveur de gaz de gueulard (28) à la buse inférieure d'insufflation (23a) du gazéificateur de fusion (1).

FIG.1

0 111 176

FIG.2

FIG.3

FIG. 4